(19) Europäisches Patentamt
European Patent Office
Office européen des brevets

(11) **EP 1 966 433 B1**

(12) **EUROPEAN PATENT SPECIFICATION**

(45) Date of publication and mention
of the grant of the patent:
**19.10.2011 Bulletin 2011/42**

(51) Int Cl.:
*D06M 13/513* (2006.01)  *D06M 15/643* (2006.01)
*C07F 7/08* (2006.01)  *C08K 5/5419* (2006.01)

(21) Application number: **06843708.6**

(22) Date of filing: **26.12.2006**

(86) International application number:
**PCT/JP2006/326335**

(87) International publication number:
**WO 2007/077951 (12.07.2007 Gazette 2007/28)**

(54) **FIBER MODIFYING METHOD**

VERFAHREN ZUR FASERMODIFIZIERUNG

PROCÉDÉ DE MODIFICATION DE FIBRE

(84) Designated Contracting States:
**DE FR GB**

(30) Priority: **28.12.2005 JP 2005379643**

(43) Date of publication of application:
**10.09.2008 Bulletin 2008/37**

(73) Proprietor: **Kao Corporation
Chuo-ku
Tokyo 103-8210 (JP)**

(72) Inventors:
• **SUZUKI, Keigo
Wakayama-shi, Wakayama 6408580 (JP)**

• **MIYANAGA, Seiichi
Tokyo 1318501 (JP)**

(74) Representative: **HOFFMANN EITLE
Patent- und Rechtsanwälte
Arabellastraße 4
81925 München (DE)**

(56) References cited:
**WO-A-01/75214    US-A- 2 507 200
US-A- 2 970 932    US-A- 5 665 471**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 1 966 433 B1

**Description**

Field of the invention

The present invention relates to a fiber modifying method for suitably improving the feel and strength of natural fibers such as cotton, wool and silk, semisynthetic fibers and regenerated fibers such as acetate and rayon, pulp and its processed paper, and nonwoven fabrics, modified fiber having improved feel and strength, and a fiber modifying agent.

Background of the invention

Natural fibers such as cotton, wool, silk and hemp, and pulp derived from wood are fibrous organic natural polymers derived from plants and animals and have been used as materials for clothing, fabrics, paper etc. since ancient times. These natural fibers have preferable characteristics respectively, and for further improving these characteristics, various fiber treatment techniques have been developed.

For example, softener treatment with an organic cationic compound is carried out very commonly nowadays to improve the feel of cotton clothing after washing thereby making it more pliant and soft or to allow wool clothing originally hardly washable with water to be washed readily even in the home.

As a modification method of conferring a drying promoting effect on fiber, a method of processing cellulose fiber which includes treating cellulose fiber with an alkali metal hydroxide, washing the fiber with water, and treating them with a hydrophobic treating agent such as a resin treating agent, a hydrophobilizing crosslinking agent or a hydrophobilizing agent is disclosed in JP-A 2003-342875. Further, JP-A 2005-89882 discloses a method of treating fiber which includes spraying objective fiber with a water-absorbing, quick-drying property-conferring composition containing a copolymer consisting of specific monomers including silicone-containing monomers and an organic solvent and then evaporating the solvent.

As a method of modifying paper more toughly, a method of applying/curing a composition based on an alkoxysilane condensate is disclosed in JP-A 2002-61094.

Summary of the invention

The present invention provides a fiber modifying method including the following steps (i) and (ii) as defined in claim 1, and a modified fiber modified by this method.

　　　Step (i): step of contacting an organosiliconate with fiber.
　　　Step (ii): step of polymerizing the organosiliconate.

Detailed description of the invention

In the prior arts, an organic cationic compound is adsorbed onto the surface of fiber to bring about softness and a fiber shrinkage preventing effect at the time of washing, however, the organic compound is washed away and eliminated in next washing, thus failing to permanently keep its softening effect.

In any of the above-described conventional methods of conferring a drying-promoting effect, the surface of fiber is significantly hydrophobilized thus seriously lowering moisture absorptivity/water absorptivity that are the most promising properties of natural fibers and also deteriorating the original feel of the fiber, to cause a problem of significantly deteriorating their comfortable feel upon wearing and use. That is, it is impossible in the state of arts to confer a drying-promoting effect on natural fibers while the original moisture absorptivity and feel of the natural fibers are maintained.

The method of applying/curing a liquid composition based on an alkoxysilane condensate is a technique in which the whole of a paper product as an aggregate of single fiber is strongly condensed and solidified with a silicon compound, and paper can be formed as filler into a resin molded product, but the processed product thus obtained has a problem of deterioration in the original pliability and moisture absorptivity of paper.

As described above, a method of suitably improving the softness, quick-drying property and toughness of natural fibers while maintaining the feel, moisture absorption/water absorption functions, inherent in the fiber, has never known up to now.

The present invention provides a novel fiber modifying method capable of conferring softness, quick-drying property and toughness on fiber while maintaining advantages inherent therein, a fiber modifying agent, and suitably modified fiber.

According to the present invention, the quick-drying property, softness and/or toughness can be conferred on fiber, while the original properties of the fiber are maintained.

[Organosiliconate]

The organosiliconate in the present invention refers to an organosilicate compound having at least one hydrocarbon group on a silicon atom, and at least one siliconate group [-Sio$^-$M$^+$ wherein M$^+$ is a group capable of forming a monovalent cation].

The organosiliconate is preferably an organosiliconate represented by the following formula (1):

$$R^1_p\text{-Si (O}^-\text{M}^+)_q \text{ (OH)}_{4-p-q} \qquad (1)$$

wherein R$^1$ represents a C1 to C6 linear or branched alkyl group or a phenyl group, M represents a group capable of forming a monovalent cation, p represents an integer of 1 or 2, and q represents a number in the range of 0.1 to (4-p).

R$^1$ is preferably a C1 to C6 alkyl group. Preferable examples include an alkyl group such as a methyl group, ethyl group, n-propyl group, isopropyl group, butyl group, isobutyl group and t-butyl group, and a phenyl group. For improving the softness of fiber, the number of carbon atoms is preferably in a broad range. R$^1$ is more preferably a methyl group or a phenyl group, more preferably a methyl group, for improving the drying rate of fiber. For improving the toughness of fiber, R$^1$ is more preferably a methyl group.

M includes alkali metals such as lithium, sodium, potassium, rubidium and cesium, an ammonium group, and a phosphonium group, and is preferably an alkali metal such as lithium, sodium or potassium, or an ammonium group, more preferably sodium or an ammonium group.

The number of M's per silicon atom, that is, q, is preferably 0.5 or more, more preferably 1 or more, from the viewpoint of the water solubility of the organosiliconate. Every hydroxyl group may be in the form of O$^-$M$^+$, and the value of 4-p-q may be 0.

The organosiliconates may be used alone or may contain a monoalkylsiliconate represented by the following formula (2) (referred to hereinafter as monoalkylsiliconate (2)) and a dialkylsiliconate represented by the following formula (3) (referred to hereinafter as dialkylsiliconate (3)):

$$R^1\text{Si(O}^-\text{M}^+)_n\text{(OH}_{)3-n} \qquad (2)$$

$$R^1_2\text{Si (O}^-\text{M}^+)_m\text{(OH)}_{2-m} \qquad (3)$$

wherein R$^1$ and M have the same meanings as defined above, a plurality of R$^1$'s and M's may be the same or different, n is a number of 0.1 to 3, and m is a number of 0.1 to 2.

In the formulae (2) and (3), the organosiliconates having the same R$^1$ and M may be used, or the organosiliconates having different R$^1$ and M may be used.

R$^1$ and M are preferably those in the formula (1). Preferable examples of the monoalkylsiliconate include lithium methylsiliconate, sodium methylsiliconate, potassium methylsiliconate, sodium ethylsiliconate, and sodium propylsiliconate, among which sodium methylsiliconate is more preferable. Preferable examples of the dialkylsiliconate include sodium dimethylsiliconate, sodium diethylsiliconate, and sodium methylethylsiliconate, among which sodium dimethylsiliconate is more preferable.

The mixing ratio of the monoalkylsiliconate (2) to the dialkylsiliconate (3) (i.e., monoalkylsiliconate (2)/dialkylsiliconate (3) ratio by weight) is preferably in the range of 95/5 to 0 /100, more preferably in the range of 95/5 to 5/95.

For improving the drying rate of fiber, the mixing ratio is more preferably in the range of 95/5 to 30/70, even more preferably 90/10 to 50/50, further more preferably 90/10 to 70/30.

For improving the softness of fiber, the mixing ratio is more preferably in the range of 70/30 to 0/100, even more preferably 50/50 to 0/100, further more preferably 30/70 to 0/100.

For improving the toughness of fiber, the mixing ratio is more preferably in the range of 95/5 to 30/70, even more preferably 95/5 to 50/50, further more preferably 95/5 to 70/30.

Each of n and m is preferably 0.5 or more, more preferably 1 or more. For further improving the water absorption and moisture absorption of fiber, n is preferably 0.5 to 1.5, more preferably 0.5 to 1.2, and m is preferably 0.5 to 2.0, more preferably 0.5 to 1.5.

[Fiber]

The fiber to which the present invention is applicable are organic fibers. The organic fibers include plant-derived water-swelling fibers such as cotton, hemp, pulp, paper mulberry, mitsumata (a paper bush, Edgeworthia Chrysantha), kenaf, cotton linter etc. ; water-swelling fibers, regenerated or semisynthetic, such as acetate and rayon, and animal water-swelling fibers such as wool fibers and silk, including fibers made of animal hair of sheep, camel, llama, alpaca etc.

As these fibers, single fiber may be subjected as such to the modifying method of the present invention, or fiber in the form of fabric, cloth, yarn, or primary or secondary fabrication products such as clothing, string, rope, paper or pulp nonwoven fabric may be subjected to the fiber modifying method of the present invention.

Preferable fiber used in the present invention include cotton, hemp, pulp, acetate, rayon, wool fiber, or primary or secondary fabrication products thereof, and more preferable fiber include cotton, pulp, acetate, rayon or primary or secondary fabrication products thereof.

[Fiber-treating agent]

The fiber-modifying agent of the present invention contains an organosiliconate and water. The content of the organosiliconate in the fiber-modifying agent of the present invention is preferably 0.1 % by weight or more, more preferably 2 % by weight or more or is preferably 82 % by weight or less, more preferably 58 % by weight or less.

The fiber-treating agent of the present invention preferably contains a surfactant for improving the permeation of the organosiliconate into the inside of single fiber. As the surfactant, it is possible to employ any of a nonionic surfactant, an anionic surfactant, a cationic surfactant and an amphoteric surfactant.

The surfactant is preferably a nonionic surfactant having a hydrophile-lipophile balance (HLB) value of 9 to 15, particularly 11 to 14. The HLB is a value calculated according to the Griffin method.

Preferable examples of the nonionic surfactant include polyoxyalkylene alkyl ether, polyoxyalkylene alkenyl ether, higher fatty acid sucrose ester, polyglycerin fatty acid ester, higher fatty acid mono- or diethanol amide, polyoxyethylene hardened castor oil, polyoxyethylene sorbitan fatty acid ester, polyoxyethylene sorbitol fatty acid ester, alkyl saccharide-based surfactants, alkylamine oxide, alkylamide amine oxide etc. Among these, polyoxyalkylene alkyl ether and polyoxyethylene hardened castor oil are preferable, and polyoxyalkylene alkyl ether is even more preferable.

The content of the surfactant in the fiber modifying agent of the present invention is preferably 0.1 to 20 % by weight, more preferably 0.5 to 15 % by weight, even more preferably 1 to 10 % by weight, from the viewpoint of emulsification upon mixing and promotion of hydrolysis.

[Method of modifying fiber]

The method of modifying fiber according to the present invention includes the steps (i) and (ii) and preferably further includes the step (iii) of washing fiber after the step (ii).

Hereinafter, each step is described in detail.

<Step (i) >

The organosiliconate is contacted with fiber, preferably by contacting the organosiliconate in an aqueous solution with fiber, more preferably by contacting it with fiber in the presence of a surfactant. The specific method of contacting the organosiliconate with fiber includes a method of applying an aqueous organosiliconate solution onto fiber, a method of spraying fiber with an aqueous organosiliconate solution, a method of dipping fiber in an aqueous organosiliconate solution, etc. The fiber to be treated may be either wet or dry.

The concentration of the organosiliconate in the aqueous organosiliconate solution is preferably 0.01 % by weight or more, more preferably 0.05 % by weight or more, even more preferably 0.2 % by weight or more. For expecting an accumulative effect, the aqueous organosiliconate solution may be used at low concentration. For expecting an outstanding effect by conducting the treatment once, it is effective to use the aqueous organosiliconate solution at high concentration. The concentration of the organosiliconate is preferably 15 % by weight or less, more preferably 10 % by weight or less.

The weight of the organosiliconate based on the weight of fiber is preferably 0.5 % by weight or more, more preferably 1 % by weight or more, to exhibit the effect of the invention. The weight is preferably 50 % by weight or less, more preferably 25 % by weight or less.

The time of contacting the organosiliconate with fiber may be a few seconds, preferably 1 minute or more, more preferably 30 minutes or more, even more preferably 1 hour or more. The contact time is preferably within 24 hours, more preferably within 12 hours. By dipping for 30 minutes or more, a significant improvement in the drying rate of fiber and toughness is recognized.

The temperature at which the organosiliconate is contacted with fiber is not particularly limited.

<Step (ii) >

Polymerization of the organosiliconate is carried out by drying fiber which have been contacted with the organosiliconate. Specifically, indoor drying, outdoor drying, hot-air drying and press heating can be mentioned. The drying temperature is carried out in the range of 50˚C to 150˚C. By drying at a temperature of 50˚C or more, more preferably 60˚C or more, the drying time can be reduced and the softness and toughness of fiber can be effectively increased.

Organosilicate can be also polymerized by neutralizing the aqueous solution of the organosilicate contained in fiber with an acid and adjusting the pH to 12 or less. The pH is preferably 11.5 or less, more preferably 11 or less, even more preferably 9 or less. Although there is no lower limit to the pH, the pH is preferably 1 or more, more preferably 5 or more. The acid used in neutralization is not particularly limited, and an inorganic acid such as hydrochloric acid, sulfuric acid, nitric acid and phosphoric acid and an organic acid such as oxalic acid, citric acid and acetic acid are preferably used.

<Step (iii) >

After the step (ii), the step (iii) of washing fiber is preferably carried out whereby an excess of the polymerized product can be removed and the original feel of fiber can be maintained. In washing, water can be used, and in this case, a surfactant may be contained in water.

[Modified fiber]

The fiber modified by the modifying method of the present invention contain a polymer of the organosiliconate on the surface of single fiber and/or the inside of single fiber. The presence of the organosiliconate polymer can be confirmed by detecting silicon on the surface of single fiber and/or in the inside of single fiber, upon analysis of a section of fiber by an energy dispersive X-ray spectroscope (EDS).

Modified fiber containing single fiber coated thereon with a polymer of the organosiliconate in a thickness of not greater than 1/10 relative to the diameter of single fiber are preferable from the viewpoint of maintaining characteristics inherent in the fiber.

Brief Description of the drawings

Fig. 1 is an SEM photograph of a section of a modified cloth obtained in Example 39;
Fig. 2 is a silicon mapping photograph of a section of a modified cloth obtained in Example 39;
Fig. 3 is an STEM photograph of a section of a modified cloth obtained in Example 39;
Fig. 4 is a photograph showing a result of qualitative analysis of spots 1 and 2 in Fig. 3;
Fig. 5 is an SEM photograph of a section of a modified cloth obtained in Example 40;
Fig. 6 is a silicon mapping photograph of a section of a modified cloth obtained in Example 40;
Fig. 7 is an STEM photograph of a section of a modified cloth obtained in Example 40;
Fig. 8 is a photograph showing a result of qualitative analysis of spots 1 and 2 in Fig. 7;
Fig. 9 is an SEM photograph of a section of a modified cloth obtained in Example 41;
Fig. 10 is a silicon mapping photograph of a section of a modified cloth obtained in Example 41; and
Fig. 11 is a photograph showing a result of qualitative analysis of spots 1 and 2 in Fig. 9.

Examples

The present invention is described in more detail by reference to the Examples 17 to 22 below. These Examples are mere illustrative of the present invention and not intended to limit the present invention.

In the Examples below, "%" is % by weight unless otherwise specified. Materials used in the following examples were obtained or prepared as follows:

• Sodium methylsiliconate

Sodium methylsiliconate (NS-1, with 33% nonvolatile component when dried at 105˚C for 3 hours, manufactured by Osaki Kogyo Co., Ltd.). The Na/Si ratio is 1.0. The sodium methylsiliconate is hereinafter referred to simply as methylsiliconate.

• Sodium dimethylsiliconate

327 g of 27.5% aqueous sodium hydroxide solution was introduced into a 1000-mL three-neck flask, and then 222 g dimethyldimethoxysilane (LS-1370 manufactured by Shin-Etsu Chemical Co., Ltd.; hereinafter, dimethyldimethoxysilane refers to this commercial product) was added thereto, and the mixture was stirred for about 24 hours while a nitrogen gas was allowed to flow into it whereby a colorless and transparent aqueous solution was obtained. The resulting aqueous solution was lyophilized to give 226 g sodium dimethylsiliconate as white solid. The Na/Si ratio was 1.5. The sodium dimethylsiliconate is referred to hereinafter as dimethylsiliconate.

Example 1 (comparative)

(1) Preparation of Modifying Agent

17.4 g methylsiliconate was mixed with 165.5 g water and then stirred for 5 minutes to give an aqueous uniform solution thereby preparing 182.9 g modifying agent. The composition of the resulting modifying agent is shown in Table 1.

(2) Pretreatment of Cotton Towels

Cotton towels (T. W220, white, manufactured by Takei Towel Co., Ltd.) were washed repeatedly 10 times with a commercially available clothing detergent (Liquid Attack, manufactured by Kao Corporation) in an automatic washing machine (Hitachi Automatic Washing Machine KW-5026 "Shizuka Gozen") (37 g detergent, 57 L tap water was used, washing for 5 minutes → rinsing once with running water → spin drying for 3 minutes). After spin drying in the final round of treatment was finished, the towels were hung and air-dried in a room to give pretreated towels. The weight of each of the pretreated towels was 70 g.

(3) Modification of the Cotton Towels

The pretreated cotton towel (69.7 g) was dipped in 182.9 g modifying agent for 60 minutes and then dried at room temperature (20˚C). The amount of the organosiliconate relative to the cotton towel was 25%. The dried cotton towel was washed with a clothing detergent (Liquid Attack, manufactured by Kao Corporation) (washing conditions: 30 g detergent, 45 L tap water was used, washing for 5 minutes → rinsing once with running water → spin drying for 3 minutes) and then air-dried in a room to give a modified towel. The increase in the weight of the cotton towel after modification was 12.3%.

(4) Evaluation of Quick-Drying Property and Water Absorption

The obtained modified cotton towels were evaluated for quick-drying property and water absorption in the following method. The results are shown in Table 1.

<Method of Evaluation of Quick-Drying Property>

The towels for evaluation were washed in an automatic washing machine (Hitachi Automatic Washing Machine KW-5026 "Shizuka Gozen") (30 g detergent, 45 L tap water was used, washing for 5 minutes → rinsing once with running water → spin drying for 3 minutes), and after spin drying was finished, the towels were hung and air-dried at a constant temperature/humidity of 20˚C under 65% RH until their weight became constant. The water content (%) with time was determined according to the following equation (I). The time in which the water content became 10% after initiation of drying was used as an indicator of quick-drying property.

$$\text{Water content (\%)} = \{\text{weight (g) of towel just after spin drying}$$

$$- \text{weight (g) of towel reaching a constant weight}\}/\text{weight (g)}$$

$$\text{of towel reaching a constant weight} \times 100 \qquad (I)$$

<Method of Evaluation of Water Absorption (Bireck Method)>

A plain-weave portion of the towel was cut into a rectangular strip with a dimension of 2 cm x 25 cm, and this strip cloth was suspended in the vertical direction by fixing its upper edge, and after the lower edge, 1 cm, was dipped in water at 20˚C, the height of water absorbed was observed with time (1 minute, 3 minutes, 5 minutes and 10 minutes) with the naked eye and recorded in the unit of cm. This measurement was carried out in a room at constant temperature/ humidity (20˚C/65% RH).

Examples 2 to 8 (comparative)

Methylsiliconate, dimethylsiliconate, and water were used to produce modifying agents having the compositions shown in Table 1 in the same manner as in Example 1. Cotton towels were modified in the same manner as in Example 1 except that these modifying agents were used, and the resulting modified cotton towels were evaluated for quick-drying property and water absorption in the same manner as in Example 1. The results are shown in Table 1.

Examples 9 to 12 (comparative)

Modifying agents with the compositions shown in Table 1 were prepared in the same manner as in Example 1, and 1 cotton towel pretreated in the same manner as in Example 1 was dipped in each of the modifying agents for about 15 minutes, then 6 N hydrochloric acid (Wako Pure Chemical Industries, Ltd.) was added dropwise thereto until the pH of the modifying agent became 7, and the towel was spin-dried. The towel in a wet state was washed with a clothing detergent (Liquid Attack, manufactured by Kao Corporation) under the same conditions as in Example 1 and air-dried in a room to give a modified towel. The resulting modified cotton towel was evaluated for quick-drying property and water absorption in the same manner as in Example 1. The results are shown in Table 1.

Comparative Example 1

A cotton towel pretreated in the same manner as in Example 1, which had not been modified with the modifying agent, was evaluated for quick-drying property and water absorption in the same manner as in Example 1. The results are shown in Table 1.

Table 1

| | | Example | | | | | | | | | | | | comparative example 1 |
|---|---|---|---|---|---|---|---|---|---|---|---|---|---|---|
| | | 1 | 2 | 3 | 4 | 5 | 6 | 7 | 8 | 9 | 10 | 11 | 12 | |
| Modifying agent | Methylsiliconate(g) | 17.4 | 12.0 | 8.5 | 5.2 | 0.0 | 2.4 | 1.2 | 0.2 | 12.0 | 8.8 | 5.2 | 0.0 | No modification |
| | Dimethylisilicoonate (g) | 0.0 | 5.1 | 8.5 | 121 | 17.2 | 5.7 | 2.8 | 0.5 | 5.2 | 8.8 8.6 | 12.0 | 17.3 | |
| | Water (g) | 165.5 | 154.7 | 149.4 | 145.8 | 137.8 | 138.8 | 136.9 | 134.7 | 1017.9 | 1012.9 | 1007.7 | 1000.0 | |
| Weight (g) of modifying agent | | 182.9 | 171.8 | 166.5 | 183.0 | 155.1 | 148.9 | 141.0 | 135.4 | 1035.1 | 1030.1 | 1024.9 | 1017.3 | |
| Formulation of the modifying agent | Organosiliconate (96) | 9.5 | 10.0 | 10.3 | 10.6 | 11.1 | 5.5 | 29 | 0.5 | 1.7 | 1.7 | 1.7 | 1.7 | |
| | Water (%) | 90.5 | 90.0 | 89.7 | 89.4 | 88.8 | 94.5 | 97.1 | 99.5 | 98.3 | 98.3 | 98.3 | 98.3 | |
| Methylsiliconate/ dimethylsiliconate (weight ratio) | | 10/0 | 7/3 | 5/5 | 3/7 | 0/10 | 3/7 | 3/7 | 3/7 | 7/3 | 5/5 | 3/7 | 0/10 | |
| Modifying method | Drying temperature (˚C) | 20 | 20 | 20 | 20 | 20 | 20 | 20 | 20 | - | - | - | - | |
| | Neutralization | - | - | - | - | - | - | - | - | Neutralization | Neutralization | Neutralization | Neutralization | |
| Modified fiber | Kind | Cotton towel | Cotton towel | Cotton towel | Cotton towel | Cotton towel | Cotton towel | Cotton towel | Cotton towel | Cotton towel | Cotton towel | Cotton towel | Cotton towel | Cotton towel |
| | Fiber weight (g) | 69.7 | 68.4 | 68.3 | 69.0 | 68.9 | 67.6 | 67.8 | 87.2 | 68.7 | 88.9 | 68.7 | 69.1 | 68.9 |
| | Modification amount (%owf*1) | 25.0 | 25.0 | 25.0 | 25.0 | 25.0 | 12.0 | 6.0 | 1.0 | 25.0 | 25.0 | 25.0 | 25.0 | - |
| | increase(%) of weight after modification | 12.3 | 15.1 | 14.2 | 12.2 | 3.4 | 5.9 | 3.7 | 1.4 | 1.5 | 1.6 | 1.5 | 1.2 | - |

EP 1 966 433 B1

| | | Example | | | | | | | | | | | | comparative example 1 |
|---|---|---|---|---|---|---|---|---|---|---|---|---|---|---|
| | | 1 | 2 | 3 | 4 | 5 | 6 | 7 | 8 | 9 | 10 | 11 | 12 | |
| Evolution of quick-drying property | Water content [%] just after spin-drying | 67.8 | 54.2 | 62.6 | 56.0 | 63.1 | 62.6 | 74.3 | 90.4 | 88.9 | 90.4 | 76.7 | 77.9 | 92.0 |
| | Drying time [hours] for reduction to 10% | 6.1 | 4.7 | 4.7 | 4.0 | 4.7 | 5.2 | 6.7 | 7.3 | 6.0 | 6.0 | 4.0 | 4.0 | 7.5 |
| Evaluation result of water absorption | Water absorption [cm] (after 1 minute) | 1.2 | 2.1 | 2.1 | 3.2 | 5.8 | 3.8 | 4.1 | 5.5 | 5.5 | 5.4 | 5.0 | 5.1 | 5.9 |
| | Water absorption [cm] (after 3 minutes) | 2.2 | 4.2 | 4.2 | 5.0 | 9.2 | 8.8 | 7.8 | 8.3 | 8.3 | 8.5 | 8.3 | 8.7 | 9.0 |
| | Water absorption [cm] (after 5 minutes) | 3.9 | 7.0 | 5.9 | 6.2 | 10.5 | 8.8 | 9.2 | 9.8 | 9.4 | 9.6 | 9.2 | 9.8 | 10.7 |
| | Water absorption [cm] (after 10 minutes) | 4.4 | 8.3 | 7.1 | 7.5 | 2.8 | 8.9 | 10.9 | 11.7 | 12.4 | 12.5 | 12.5 | 12.7 | 13.0 |

*1: % owf refers to the percentage by weight of the siliconate in the solution relative to the fiber (this applies also to Tables below).

EP 1 966 433 B1

As is evident from Table 1, the towels modified by the fiber modifying method showed lower water contents upon spin drying after washing than the controls which were not subjected to the modification treatment of the present invention and have reduced the drying time required for reduction to a water content of 10%. When methylsiliconate and dimethylsiliconate are simultaneously used, particularly when the proportion of dimethylsiliconate is higher, not only a reduction in the time required for attaining a water content of 10% but also excellent water absorption could be achieved.

Examples 13 to 22 (examples 13 to 16 comparative)

Methylsiliconate, dimethylsiliconate, and water were used to prepare modifying agents having the compositions shown in Table 2 in the same manner as in Example 1. Cotton towels were modified with these modifying agents in the same manner as in Example 1 to give modified cotton towels. However, the step (ii) was carried out by drying at 20˚C in Examples 13 to 16, and the polymerization step (ii) was carried out by drying at 80˚C in Examples 17 to 22. The resulting modified cotton towels were evaluated for their softness by the following method. The results are shown in Table 2.

<Method of Evaluation of Softness>

The towels were washed once with a commercial clothing detergent (Liquid Attack, manufactured by Kao Corporation) in an automatic washing machine (Hitachi Automatic Washing Machine KW-5026 "Shizuka Gozen") (37 g detergent, 57 L tap water was used, washing for 5 minutes → rinsing once with running water → spin drying for 3 minutes). The washed towels were air-dried in a room and left for 1 day in a room at constant temperature/humidity (20˚C/65% RH). Thereafter, the towels were evaluated sensorially three times for softness to the touch by a panel of 5 persons, and the average softness was determined.
Point -3: The treated towel is evidently harder than the unmodified towel.
Point -2: The treated towel is a little harder than the unmodified towel.
Point -1: The treated towel is slightly harder than the unmodified towel.
Point 0: The treated towel is not different in hardness from the unmodified towel.
Point 1: The treated towel is slightly softer than the unmodified towel.
Point 2: The treated towel is a little softer than the untreated towel.
Point 3: The treated towel is evidently softer than the unmodified towel.

Examples 23 to 24 (comparative)

Methylsiliconate, dimethylsiliconate, and water were used to prepare modifying agents having the compositions shown in Table 2 in the same manner as in Example 1. Cotton towels were modified with these modifying agents in the same manner as in Example 9 to give modified towels. The final pH upon neutralization after dipping was 7. The resulting modified cotton towels were evaluated for their softness in the same manner as in Example 13. The results are shown in Table 2.

Comparative Example 2

Cotton towels pretreated in the same manner as in Example 1, which had not been modified with the modifying agent, were evaluated for softness in the same manner as in Example 13. The results are shown in Table 2.

Table 2

| | | Example | | | | | | | | | | | | Comparative example 2 |
|---|---|---|---|---|---|---|---|---|---|---|---|---|---|---|
| | | 13 | 14 | 15 | 16 | 17 | 18 | 19 | 20 | 21 | 22 | 23 | 24 | |
| Modifying agent | Methylsiliconate(g) | 8.5 | 5.2 | 0.0 | 24 | 12.1 | 8.6 | 5.2 | 0.0 | 2.4 | 1.2 | 5.2 | 0.0 | No modification |
| | Dimethylsiliconate (g) | 8.5 | 12.1 | 17.2 | 5.7 | 5.2 | 8.6 | 12.1 | 17.4 | 5.7 | 2.8 | 12.0 | 17.3 | |
| | Water(g) | 149.4 | 145.8 | 137.8 | 138.8 | 156.2 | 150.7 | 146.0 | 138.8 | 138.7 | 136.4 | 1007.7 | 1000.0 | |
| Weight(g) of the modifying agent | | 166.5 | 163.0 | 155.1 | 146.9 | 173.5 | 167.9 | 163.3 | 156.2 | 146.8 | 140.4 | 1024.9 | 1017.3 | |
| Formulation of the modifying agent | Organosiliconate (%) | 10.3 | 10.6 | 11.1 | 5.5 | 10.0 | 10.3 | 10.6 | 11.1 | 5.5 | 2.9 | 1.7 | 1.7 | |
| | Water (%) | 89.7 | 89.4 | 88.9 | 94.5 | 90.0 | 89.7 | 89.4 | 88.9 | 94.5 | 97.1 | 98.3 | 98.3 | |
| Methylsiliconate/ dimethylsiliconate(%) (weight ratio) | | 5/5 | 3/7 | 0/10 | 3/7 | 7/3 | 5/5 | 3/7 | 0/10 | 3/7 | 3/7 | 3/7 | 0/10 | |
| Modifying method | Drying temperature (°C) | 20 | 20 | 20 | 20 | 80 | 80 | 80 | 80 | 80 | 80 | - | - | |
| | Neutralization | - | - | - | - | - | - | - | - | - | - | Neutralization | Neutralization | |
| Modified fiber | Kind | Cotton towel | Cotton towel | Cotton towel | Cotton towel | Cotton towel | Cotton towel | Cotton towel | Cotton towel | Cotton towel | Cotton towel | Cotton towel | Cotton towel | Cotton towel |
| | Fiber weight(g) | 68.3 | 69.0 | 68.9 | 67.6 | 69.1 | 68.9 | 89.2 | 69.4 | 67.5 | 67.3 | 68.7 | 69.1 | 68.9 |
| | Modification amount (%owf) | 25 | 25 | 25 | 12 | 25 | 25 | 25 | 25 | 12 | 6 | 25 | 25 | - |
| | Increase(%) of weight after modification | 14.2 | 12.2 | 3.4 | 5.9 | 3.7 | 5.5 | 7.1 | 6.4 | 4.0 | 2.8 | 1.5 | 1.2 | - |
| Evaluation | result of softness | 1.2 | 2.0 | 1.8 | 1.6 | 1.6 | 2.8 | 3.0 | 3.0 | 2.6 | 0.6 | 1.0 | 1.0 | 0.0 |

EP 1 966 433 B1

EP 1 966 433 B1

As is evident from Table 2, the towels modified by the modification method of the present invention became so soft to the touch as to be sufficiently recognizable as compared with the unmodified towels. The modifying method involving polymerization at 80°C could confer higher softness.

Examples 25 to 31 (example 25 comparative)

Methylsiliconate, dimethylsiliconate, polyoxyethylene lauryl ether (Emulgen 108 manufactured by Kao Corporation; the average number of ethylene oxides added, 6; HLB 12. 1) and water were used to prepare modifying agents having the compositions shown in Table 3 in the same manner as in Example 1. A wool sweater (ram crew neck sweater, gray, manufactured by UNIQLO), silk, rayon tow, hemp, acetate tow (all of which are commercially available), crystalline cellulose powder (manufactured by MERCK) and Laubholz bleached kraft pulp (LBKP) were dipped in each of these modifying agents for 60 minutes and then dried at 80°C for 12 hours, and thereafter, the respective fiber were washed in the same manner as in Example 1 to give modified fiber. The respective modified fiber, as compared with their corresponding unmodified fiber as the control, were evaluated for softness in the same manner as in Example 13. The results are shown in Table 3.

Example 32

5.3 g paper obtained by the following production method was dipped for 30 seconds in 124.5 g modifying agent with the composition shown in Table 3, then raised, air-dried at room temperature for 10 minutes, and dried at 105°C for 2 minutes. The increase in the weight of the paper after modification was 12.5%. The resulting paper after modification, as compared with untreated paper as control, was evaluated for softness in the same manner as in Example 13. The results are shown in Table 3.

<Method of Producing the Paper>

Laubholz bleached kraft pulp (abbreviated hereinafter as LBKP) was dissociated and beaten at room temperature to give 2.2% LBKP slurry. The Canadian standard freeness of the slurry was 420 ml. 2.2% LBKP slurry was weighed out such that the basis weight of a sheet after paper making became 85 $g/m^2$ on an oven-dry weight basis. The slurry was diluted to a pulp density of 0.5% with water and used to produce paper with a 150-mesh wire in a rectangular TAPPI paper making machine, followed by coating to give wet paper. The wet paper after paper making was pressed at 3.5 $kg/cm^2$ for 5 minutes with a pressing machine and then dried at 105°C for 2 minutes with a drum dryer. The water content of the dried paper was regulated for 1 day under the conditions of 23°C and 50% humidity.

Table 3

| | | Example | | | | | | | |
|---|---|---|---|---|---|---|---|---|---|
| | | 25 | 26 | 27 | 28 | 29 | 30 | 31 | 32 |
| Modifying agent | Methylsiliconate (g) | 25.7 | 0.3 | 0.6 | 0.6 | 5.5 | 3.0 | 13.3 | 4.0 |
| | Dimethysiliconate (g) | 60.0 | 0.8 | 1.4 | 1.5 | 12.9 | 7.0 | 31.0 | 9.2 |
| | Emulgen 108(g) | 7.1 | 0.0 | 0.0 | 0.0 | 0.0 | 0.0 | 0.0 | 0.0 |
| | Water (g) | 723.7 | 8.9 | 9.2 | 9.3 | 302.7 | 110.5 | 374.4 | 111.3 |
| Weight of modifying agent (g) | | 826.5 | 8.0 | 11.2 | 11.4 | 321.1 | 120.5 | 418.7 | 124.5 |
| Formulation of the modifying agent | Organosiliconate (%) | 10.4 | 13.4 | 18.4 | 18.4 | 5.7 | 8.3 | 10.8 | 10.8 |
| | Emulgen 108(%) | 2.4 | 0.0 | 0.0 | 0.0 | 0.0 | 0.0 | 0.0 | 0.0 |
| | Water(%) | 87.6 | 86.6 | 81.6 | 81.6 | 94.3 | 91.7 | 89.4 | 89.4 |
| Methylsiliconate/ dimethylsiliconate (weight ratio) | | 3/7 | 3/7 | 3/7 | 3/7 | 3/7 | 3/7 | 3/6 | 3/7 |
| Drying temperature (˚C) | | 20 | 80 | 80 | 80 | 80 | 80 | 80 | 105 |
| Modified fiber | kind | Wool sweater | Silk | Rayon tow | Hemp | Acetate tow | Cellulose | Pulp | Paper |
| | Fiber weight (g) | 342.7 | 4.3 | 8.2 | 8.4 | 73.6 | 40.0 | 177.3 | 5.3 |
| | modification amount (%owf) | 25.0 | 25.0 | 25.0 | 25.0 | 25.0 | 25.0 | 25.0 | 25.0 |
| | Increase in weight after modification (%) | 7.5 | 10.0 | 7.5 | 8.8 | 5.4 | 5.7 | 4.5 | 12.5 |
| Evaluation result of softness | | 1.6 | 0.6 | 1.2 | 0.6 | 1.4 | 1.6 | 2.4 | 2.6 |

EP 1 966 433 B1

13

As is evident from Table 3, the fiber modified by the modification treatment of the present invention became so soft to the touch as to be sufficiently recognizable as compared with the corresponding unmodified fiber.

Examples 33 to 36

Methylsiliconate, dimethylsiliconate, and water were used to prepare modifying agents having the compositions shown in Table 4 in the same manner as in Example 1. Five cotton towels were modified with these modifying agents in the same manner as in Example 17. The resulting modified towels were evaluated for prevention of removal of down by the following method. The results are shown in Table 4.

<Method of Evaluating Prevention of Removal of Down>

The 5 towels were dried for 3 hours in a tumbler-type drying machine (dehumidification-type electric clothing drying machine NH-D502, manufactured by Matsushita Electric Industrial Co., Ltd.), and this drying for 3 hours was repeated 10 times. From the amount of down remaining on a filter of the drying machine, the degree of down removal was determined according to the following equation:

Degree of down removal (%) = amount of down remaining on a filter of the drying machine/weight of the towels before drying × 100

Comparative Example 3

Cotton towels pretreated in the same manner as in Example 1, which had not been modified with the modifying agent, were evaluated for prevention of down removal in the same manner as in Example 33. The results are shown in Table 4.

Table 4

| | | Exampel | | | | Comparative example 3 |
|---|---|---|---|---|---|---|
| | | 33 | 34 | 35 | 36 | |
| Modifying agent | Methylsilicanate (g) | 86.7 | 61.0 | 14.6 | 2.4 | No modification |
| | Dimethylsiliconate (g) | 0.0 | 26.1 | 6.3 | 1.0 | |
| | Water(g) | 823.1 | 787.6 | 716.9 | 690.6 | |
| Weight of modifying agent(g) | | 909.8 | 874.7 | 737.7 | 694.0 | |
| Formulation of the moving agent | Organosiliconate (%) | 9.5 | 10.0 | 2.8 | 0.5 | |
| | Water(%) | 90.5 | 90.0 | 97.2 | 99.5 | |
| Methylsiliconate/dimethysiliconate (weight ratio) | | 10/0 | 7/3 | 7/3 | 7/3 | |
| Drying temperature (˚C) | | 80 | 80 | 80 | 80 | |

(continued)

| | | Exampel | | | | Comparative example 3 |
|---|---|---|---|---|---|---|
| | | 33 | 34 | 35 | 36 | |
| Modified fiber | Kind | Cotton towel | Cotton towel | Cotton towel | Cotton towel | Cotton towel |
| | Fiber weight (g) | 346.9 | 348.3 | 347.5 | 343.5 | 68.9 |
| | Modification amount (%owf) | 25.0 | 25.0 | 6.0 | 1.0 | - |
| | Increase (%) in weight after modification | 4.7 | 5.2 | 2.2 | 1.5 | - |
| Evaluation result of prevention of down removal | Degree of down removal (96) | 0.21 | 0.17 | 0.20 | 0.23 | 0.28 |

As is evident from Table 4, the modified towels of the present invention indicated that removal of down can be controlled sufficiently recognizably with less release of down in processing in the drying machine than the unmodified towels.

Examples 37 and 38 (comparative)

Methylsiliconate, dimethylsiliconate, polyoxyethylene lauryl ether (Emulgen 108 manufactured by Kao Corporation) and water were used to prepare modifying agents having the compositions shown in Table 5 in the same manner as in Example 1. A wool jersey (wool jersey knit cloth (manufactured by Yato Shoten) cut in a size of 2.0 cm in width x 2.0 cm in length) was dipped in each of the modifying agents for 60 minutes and then dried at 80°C for 12 hours to give a modified wood jersey for evaluation. This wool jersey was evaluated for wear resistance in the following method. The results are shown in Table 5.

<Method of Evaluating Wear Resistance>

The wool jersey cut in a size of 1.3 cm in width and 19.5 cm in length was wound around a rotating portion of an Acron wear testing machine (for JIS tire rubber) and examined in a wear test under a loading of 4.5 kg at an inclined angle of 5° on a truck wheel A36-P5-V, 3000 revolutions, at a rate of 75 rpm, and damage to the portion of the cloth contacting with a whetstone was evaluated under the following criteria:
⊙: Frayed spots (fiber cutting) are less than 10%.
○: Frayed spots (fiber cutting) are 10 or more and less than 50%.
x: Frayed spots (fiber cutting) are 50% or more.

Comparative Example 4

A wool jersey not modified with the modifying agent of the present invention was evaluated for wear resistance in the same manner as in Example 37. The results are shown in Table 5.

Table 5

| | | Example 37 | Example 38 | Comparative example 4 |
|---|---|---|---|---|
| Modifying agent | Methylsiliconate(g) | 3.1 | 2.1 | No modification |
| | Dimethylsiliconata(g) | 0.0 | 0.9 | |
| | Emulgen 108 (g) | 0.6 | 0.6 | |
| | Water(g) | 29.2 | 26.7 | |
| Weight of modifying agent (g) | | 32.9 | 30.2 | |
| Formulation of the modifying agent | Organosiliconete(96) | 9.4 | 9.8 | |
| | Emulgen 108(%) | 1.9 | 2.0 | |
| | Water (%) | 88.8 | 88.3 | |
| Methylsiliconete/dimethylsiliconate (weight ratio) | | 10/0 | 7/3 | |
| Drying temperature (˚C) | | 20 | 20 | |
| Modified fiber | Kind | Wool jersey | Wool jersey | Wool jersey |
| | Fiber weight(g) | 12.3 | 11.8 | 12.2 |
| | Modification amount(%owf) | 25.0 | 25.0 | - |
| | Increase in weight after modification (%) | 4.1 | 8.1 | - |
| Evaluation result of wear resistance | Wear test (visual check) | O | ◎ | x |

As is evident from the results in Table 5, the modified fiber of the present invention, as compared with the unmodified fiber, have improved wear resistance to a whetstone, to exhibit increased toughness.

Example 39

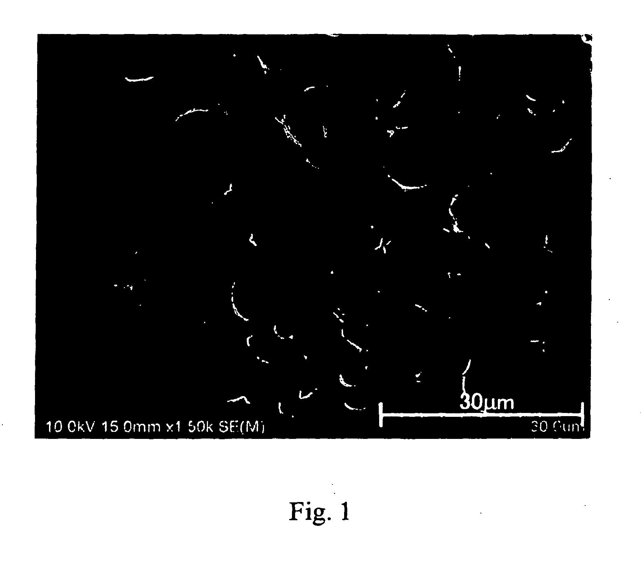

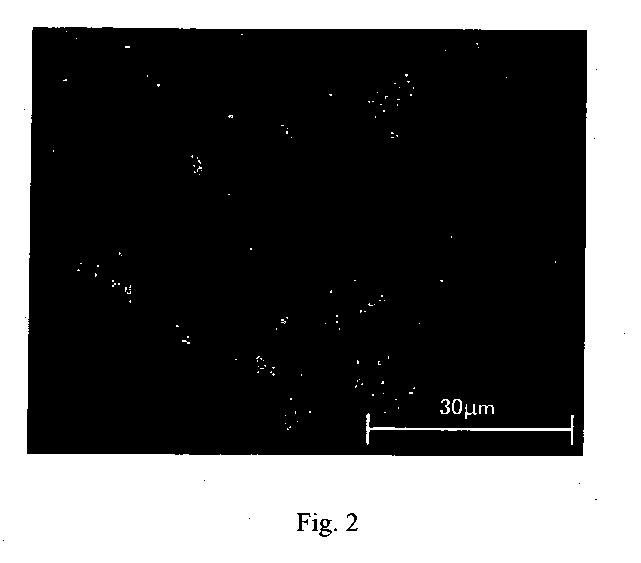

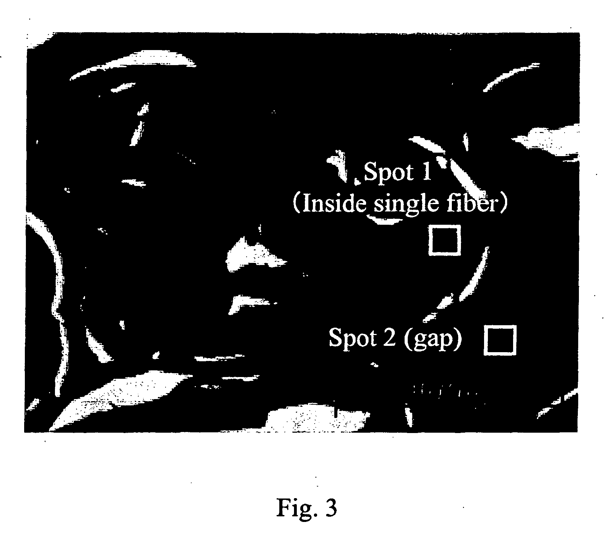

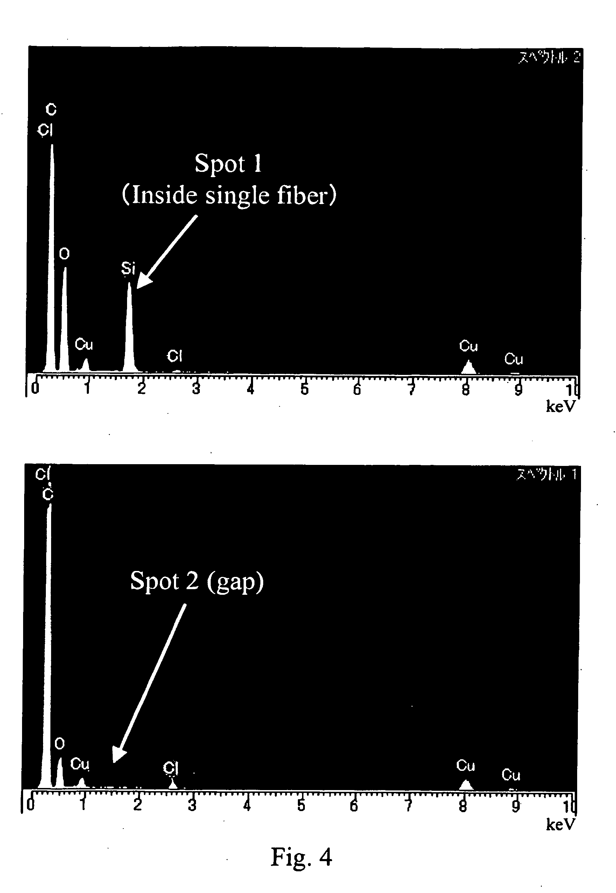

Methylsiliconate and water were used to prepare modifying agents having the compositions shown in Table 6 in the same manner as in Example 1. A cotton broad cloth pretreated in the following manner was dipped in each of the modifying agents and dried at 80˚C and then washed in the same manner as in Example 1 to give a modified cloth. The resulting modified cloth was subjected to plane analysis of silicon in a section of the single fiber (SEM-EDS observation) by the following method. An SEM photograph of a section of this modified cloth is shown in Fig. 1, and its silicon mapping is shown in Fig. 2. The modified cloth was also subjected to element analysis of a section of the single fiber (STEM-EDS observation) by the following method. An STEM photograph of a section of this modified cloth is shown in Fig. 3, and the results of qualitative analysis of the inside (spot 1) of single fiber and the gap (spot 2) between single fiber are shown in Fig. 4.
In Figs. 1 and 2, it was observed that silicon is distributed mainly on the surface of single fiber of cotton. In Figs. 3 and 4, it was observed that silicon is present in the inside of single fiber in the qualitative analysis of the inside (spot 1) of single fiber and the gap (spot 2) between single fiber.

<Method of Pretreatment of Cotton Broad Cloth>

1.5 kg cotton broad cloth (manufactured by Yato Shoten) was washed 5 times with a commercial detergent ("Attack" manufactured by Kao Corporation) in an automatic washing machine (type NW-6BZ, Hitachi, Ltd.) (detergent concentration of 0.0667%, 54 L tap water, water temperature of 20˚C, washing for 9 minutes rinsing once with stationary water → spin drying for 1 minute), then washed with water (rinsing with running water for 15 minutes → spin drying for 5 minutes) in a two-bath washing machine (VH-360S1 manufactured by Toshiba Corporation) and then air-dried. This cloth was cut into a piece of 15 cm x 25 cm to give a pretreated cloth.

<Plane Analysis of Silicon in Single-Fiber Section (SEM-EDS Observation)>

The fiber was embedded in epoxy resin, then hardened and cut into a section with a microtome (ULTRACUT UTR manufactured by LEICA) and made electrically conductive by deposition with Pt-Pd. This fiber section was observed under a field emission scanning electron microscope (FE-SEM: S4800, manufactured by Hitachi, Ltd., accelerating voltage of 15 kV, probe current High, focus mode HR, condenser lens 3, aperture 1). The plane analysis of silicon was carried out with an energy dispersive X-ray spectroscope (EDS) (EMAX ENERGY EX-350 manufactured by Horiba, Ltd., mapping measurement time 1500 seconds, process time 5).

<Qualitative Analysis of Single-Fiber Section (STEM-EDS Observation)>

The fiber was embedded in epoxy resin, then hardened and cut into a thin section of 200 nm in thickness with a microtome (ULTRACUT UTR manufactured by LEICA). This fiber section was observed under a field emission scanning electron microscope (FE-SEM: S4800, manufactured by Hitachi, Ltd., accelerating voltage of 30 kV, probe current High, focus mode HR, condenser lens 3, aperture 1).
Qualitative analysis was carried out with an energy dispersive X-ray spectroscope (EDS) (EMAX ENERGY EX-350 manufactured by Horiba, Ltd., qualitative analysis, loading time 60 seconds, process time 6), to determine the presence of silicon in each spot.

Example 40

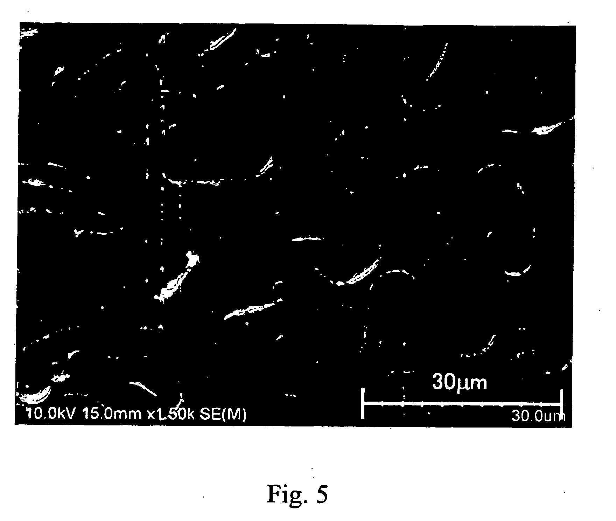

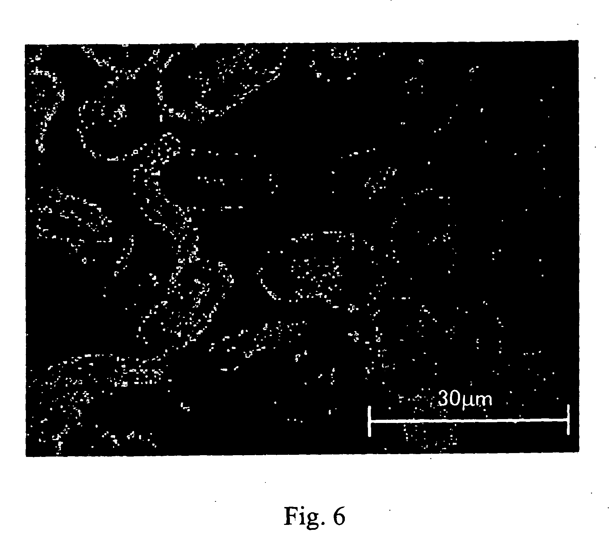

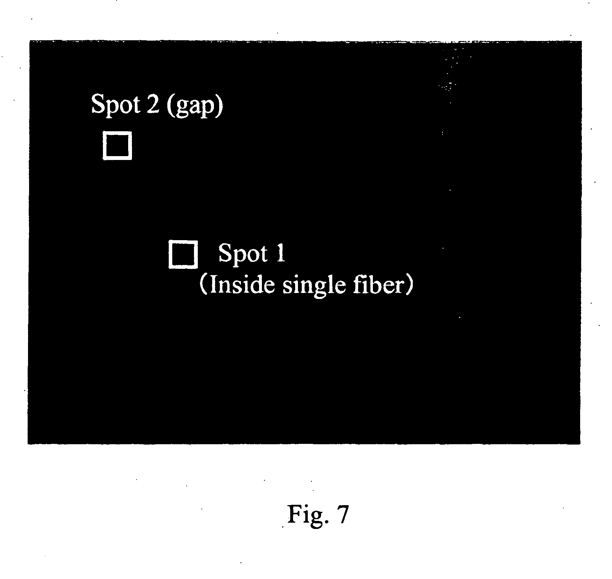

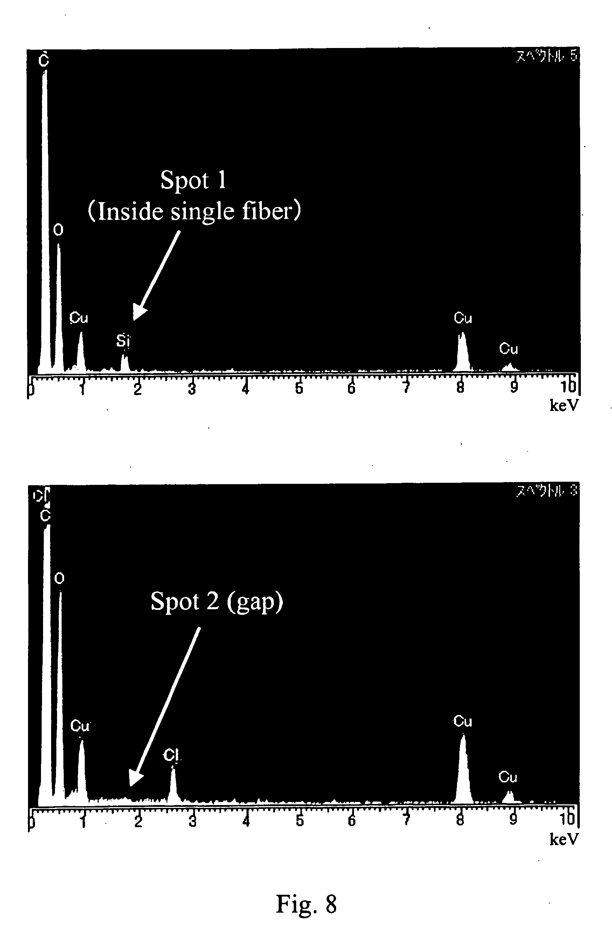

Methylsiliconate, dimethylsiliconate and water were used to prepare modifying agents having the compositions shown in Table 6 in the same manner as in Example 1. A cloth was modified with each of these modifying agents in the same manner as in Example 39 to give a modified cloth. The resulting modified cloth was examined for plane analysis of silicon in a section of the single fiber (SEM-EDS observation) and for qualitative analysis of a section of the single fiber (STEM-EDS observation) in the same manner as in Example 39. An SEM photograph of a section of this modified cloth is shown in Fig. 5, and its silicon mapping is shown in Fig. 6. An STEM photograph of a section of this modified cloth is shown in Fig. 7, and the results of qualitative analysis of the inside (spot 1) of single fiber and the gap (spot 2) between single fiber are shown in Fig. 8.
in Figs. 5 and 6, it was observed that silicon is distributed mainly on the surface of single fiber of cotton and is also present in the inside of single fiber. From Figs. 7 and 8, it was confirmed that silicon is present in the inside of single fiber, but silicon is not present in the gap between single fiber.

Example 41 (comparative)

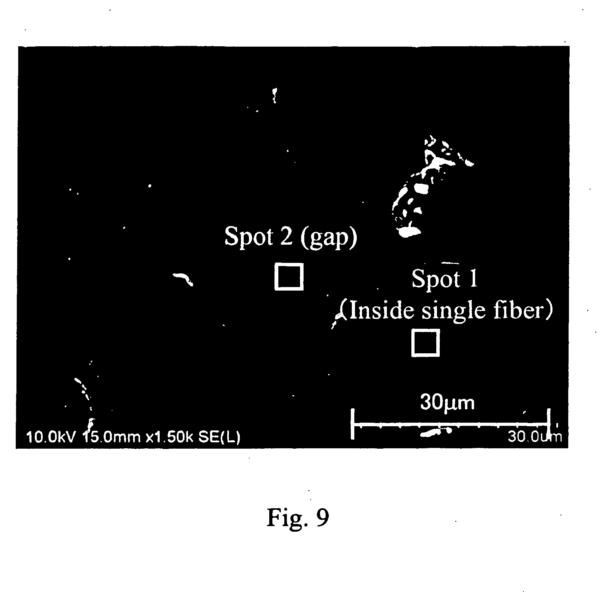

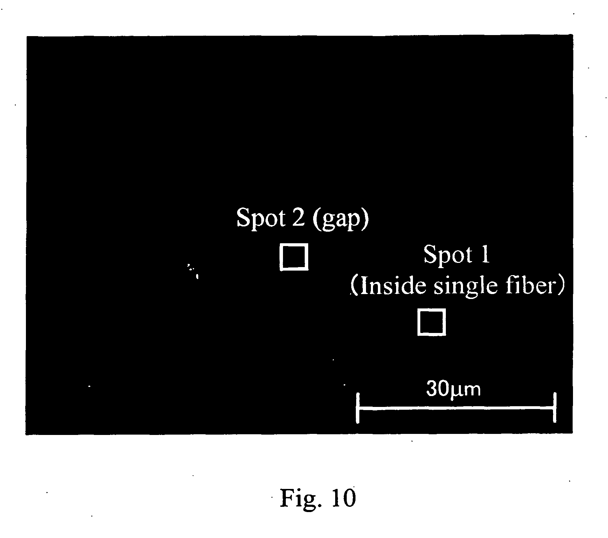

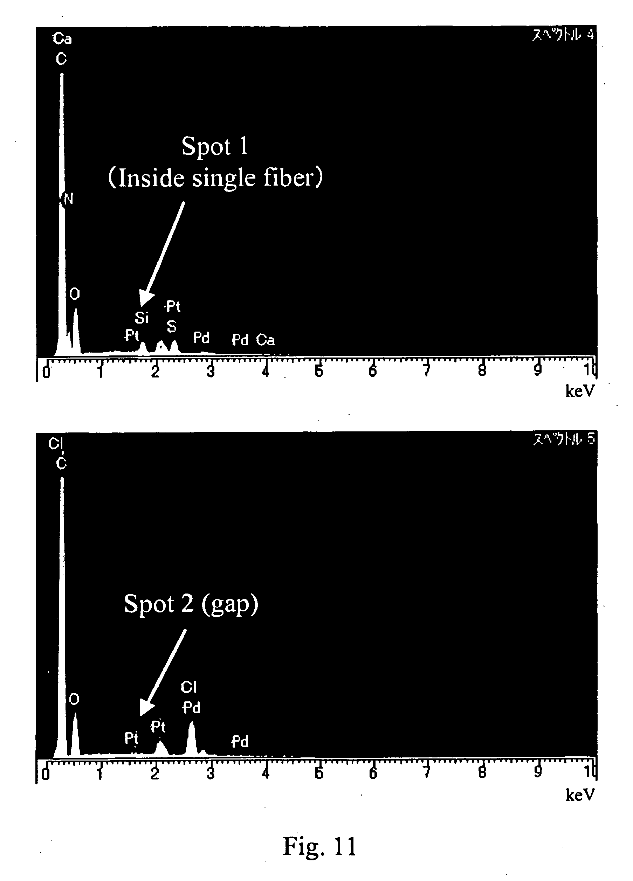

Methylsiliconate, dimethylsiliconate, polyoxyethylene lauryl ether (Emulgen 108 manufactured by Kao Corporation) and water were used to prepare modifying agents having the compositions shown in Table 6 in the same manner as in Example 1. A wool jersey cloth (wool jersey knit cloth (manufactured by Yato Shoten) cut in a size of 2.0 cm x 2.0 cm) was dipped in each of the modifying agents for 60 minutes, then dried at 20˚C and then washed in the same manner as in Example 1 to give a modified cloth. The resulting modified cloth was subjected to plane analysis of silicon in a section of single fiber (SEM-EDS observation) in the same manner as in Example 39. An SEM photograph of a section of this modified cloth is shown in Fig. 9, and its silicon mapping is shown in Fig. 10. In Figs. 9 and 10, it was observed that silicon is thinly and uniformly distributed mainly on the surface of single fiber of the wool jersey cloth and is also present in the inside of single fiber. The results of qualitative analysis of the inside (spot 1) of single fiber and the gap (spot 2) between single fiber in the same visual field as in SEM-EDS observation are shown in Fig. 11.

Table 6

| | | Example | | |
| --- | --- | --- | --- | --- |
| | | 39 | 40 | 41 |
| Modifying agent | Methylsiliconate (g) | 1.3 | 0.4 | 0.9 |
| | Dimethylsiliconate (g) | 0.0 | 1.0 | 2.1 |
| | Water(g) | 12.7 | 11.7 | 25.3 |
| | Emulgen 108 (g) | 0.0 | 0.0 | 0.6 |
| Weight of the modifying agent(g) | | 14.0 | 13.1 | 28.9 |

(continued)

| | | Example | | |
|---|---|---|---|---|
| | | 39 | 40 | 41 |
| Formulation of the modifying agent | Organosiliconate (%) | 9.5 | 10.6 | 10.4 |
| | Emulgen 108 (%) | 0.0 | 0.0 | 2.1 |
| | Water(%) | 90.5 | 89.4 | 87.6 |
| Methylsiliconate/dimethylsiliconate (weight ratio) | | 10/0 | 3/7 | 3/7 |
| Drying temperature (˚C) | | 80 | 80 | 20 |
| Modified fiber | Kind | cotton broad cloth | cotton broad cloth | wool jersey |
| | Fiber amount (g) | 5.3 | 5.5 | 12.0 |
| | Modification amount (% owf) | 25 | 25 | 25 |
| | Increase in weight after modification (%) | 8.4 | 7.2 | 8.6 |

It is evident from the above that the modified fiber of the invention includes silicon inside, not in gap among single fiber. This causes no fixing among single fiber, but free movement of the fiber.

## Claims

1. A method of modifying fiber, comprising the following steps (i) and (ii):

step (i) of contacting an organosiliconate with organic fiber selected from plant-derived water-swelling fibers of cotton, hemp, pulp, paper mulberry, mitsumata, kenaf or cotton linter; water-swelling fibers, regenerated or semisynthetic of acetate or rayon; and animal water-swelling fibers of wool fibers or silk, made of animal hair of sheep, camel, lama or alpaca, and
step (ii) of polymerizing the organosiliconate by drying the fiber at a temperature of 50 ˚C or more.

2. The method according to claim 1, wherein the organosiliconate is an organosiliconate represented by the following formula (1):

$$R^1{}_p\text{-}Si(O^-M^+)_q(OH)_{4-p-q} \qquad (1)$$

wherein R1 represents a $C_1$ to $C_6$ linear or branched alkyl group or a phenyl group, M represents a group capable of forming a monovalent cation, p represents an integer of 1 or 2 , and q represents a number in the range of 0.1 to (4-p) .

3. The method according to claim 1, wherein the organosiliconate comprises a monoalkylsiliconate represented by the following formula (2) and a dialkylsiliconate represented by the following formula (3):

$$R^1Si(O^-M^+)_n(OH)_{3-n} \qquad (2)$$

$$R^1{}_2Si(O^-M^+)_m(OH)_{2m.} \qquad (3)$$

wherein $R^1$ and M have the same meanings as defined in claim 2, and a plurality of $R^1$ and M may be the same as or different from one another, n is a number of 0.1 to 3, and m is a number of 0.1 to 2.

4. The method according to claim 1, wherein, in step (i), the organosiliconate is contacted in an aqueous solution thereof with fiber.

5. The method according to claim 1, wherein, in step (i), the organosiliconate is contacted with fiber in the presence of a surfactant.

6. The method according to claim 1, wherein, in step (ii), the polymerization of the organosiliconate is carried out at 60 ˚C or more.

7. The method according to claim 1, which further comprises step (iii) of washing the fiber after step (ii).

8. A modified fiber modified by the method according to any of claims 1 to 7.

9. The modified fiber according to claim 8, wherein the surface of a single fiber is coated thereon with a polymer of the organosiliconate to have a thickness being not greater than 1/10 as large as the diameter of the single fiber.

10. The modified fiber according to claim 8, wherein a polymer of the organosiliconate is contained in the inside of the single fiber.

**Patentansprüche**

1. Verfahren zum Modifizieren von Faser, umfassend die folgenden Schritte (i) und (ii):

Schritt (i) des Kontaktierens eines Organosilikonats mit organischer Faser ausgewählt aus Pflanzen-abgeleiteten Wasser-quellenden Fasern von Baumwolle, Hanf, Zellstoff, Maulbeerpapier, Mitsumata, Kenaf oder Baumwollfluser; regenerierten oder semisynthetischen Wasser-quellenden Fasern, aus Acetat oder Rayon; sowie tierischen Wasser-quellenden Fasern aus Wollfasern oder Seide, hergestellt aus Tierhaar von Schaf, Kamel, Lama oder Alpaka, sowie
Schritt (ii) des Polymerisierens des Organosilikonats durch Trocknen der Faser bei einer Temperatur von 50˚C oder mehr.

2. Verfahren gemäß Anspruch 1, wobei das Organosilikonat ein Organosilikonat ist, das durch folgende Formel (1):

$$R^1_p\text{-}Si(O^-M^+)_q(OH)_{4-p-q} \qquad (1)$$

dargestellt wird,
wobei R1 eine $C_1$-$C_6$ geradkettige oder verzweigte Alkylgruppe oder eine Phenylgruppe darstellt, M eine Gruppe darstellt, die imstande ist, ein einwertiges Kation zu bilden, p eine ganze Zahl von 1 oder 2 darstellt und q eine Zahl im Bereich von 0,1 bis (4-p) darstellt.

3. Verfahren gemäß Anspruch 1, wobei das Organosilikonat ein Monoalkylsilikonat, dargestellt durch die folgende Formel (2) und ein Dialkylsilikonat, dargestellt durch die folgende Formel (3), umfasst:

$$R^1\text{-}Si(O^-M^+)_n(OH)_{3-n} \qquad (2)$$

$$R^1_2\text{-}Si(O^-M^+)_m(OH)_{2-m} \qquad (3),$$

wobei $R^1$ und M die gleichen Bedeutungen wie in Anspruch 2 definiert haben und eine Vielzahl von $R^1$ und M gleich oder unterschiedlich voneinander sein können, n eine Zahl von 0,1 bis 3 ist und m eine Zahl von 0,1 bis 2 ist.

4. Verfahren gemäß Anspruch 1, wobei in Schritt (i) das Organosilikonat in einer wässrigen Lösung davon mit Faser in Kontakt gebracht wird.

5. Verfahren gemäß Anspruch 1, wobei in Schritt (i) das Organosilikonat in Gegenwart eines Tensids mit Faser in Kontakt gebracht wird.

6. Verfahren gemäß Anspruch 1, wobei in Schritt (ii) die Polymerisierung des Organosilikonats bei 60˚C oder mehr durchgeführt wird.

7. Verfahren gemäß Anspruch 1, welches weiterhin Schritt (iii) des Waschens der Faser nach Schritt (ii) umfasst.

**8.** Modifizierte Faser, modifiziert durch das Verfahren gemäß einem der Ansprüche 1 bis 7.

**9.** Modifizierte Faser gemäß Anspruch 8, wobei die Oberfläche einer einzelnen Faser mit einem Polymer des Organosilikonats beschichtet wird, um eine Dicke zu haben, die nicht mehr als 1/10 so groß wie der Durchmesser der einzelnen Faser ist.

**10.** Modifizierte Faser gemäß Anspruch 8, wobei ein Polymer des Organosilikonats im Inneren der einzelnen Faser enthalten ist.

**Revendications**

**1.** Procédé de modification de fibre, comprenant les étapes (i) et (ii) suivantes :

l'étape (i) consistant à mettre en contact un organosiliconate avec une fibre organique choisie parmi les fibres d'origine végétale gonflant dans l'eau suivantes : coton, chanvre, pâte à papier, mûrier à papier, mitsumata, kénaf ou linter de coton ; les fibres gonflant dans l'eau, régénérées ou semi-synthétiques d'acétate ou de rayonne ; et les fibres gonflant dans l'eau d'origine animale suivantes : de laine ou soie, constituées de poil de mouton, chameau, lama ou alpaga, et
l'étape (ii) consistant à polymériser l'organosiliconate en séchant la fibre à une température de 50°C ou plus.

**2.** Procédé selon la revendication 1, dans lequel l'organosiliconate est un organosiliconate représenté par la formule (1) suivante :

$$R^1{}_p\text{-}Si(O^-M^+)_q(OH)_{4-p-q} \qquad (1)$$

où $R^1$ représente un groupe alkyle linéaire ou ramifié en $C_1$ à $C_6$ ou un groupe phényle, M représente un groupe capable de former un cation monovalent, p représente le nombre entier 1 ou 2, et q représente un nombre dans la plage de 0,1 à (4-p).

**3.** Procédé selon la revendication 1, dans lequel l'organosiliconate comprend un monoalkylsiliconate représenté par la formule (2) suivante et un dialkylsiliconate représenté par la formule (3) suivante :

$$R^1Si(O^-M^+)_n(OH)_{3-n} \qquad (2)$$

$$R^1{}_2Si(O^-M^+)_m(OH)_{2-m} \qquad (3)$$

dans lequel $R^1$ et M ont les significations définies dans la revendication 2, et une pluralité de $R^1$ et M peuvent être identiques ou différents les uns des autres, n est un nombre de 0,1 à 3, et m est un nombre de 0,1 à 2.

**4.** Procédé selon la revendication 1, dans lequel, dans l'étape (i), l'organosiliconate en solution aqueuse est mis en contact avec une fibre.

**5.** Procédé selon la revendication 1, dans lequel, à l'étape (i), l'organosiliconate est mis en contact avec une fibre en présence d'un tensioactif.

**6.** Procédé selon la revendication 1, dans lequel, dans l'étape (ii), la polymérisation de l'organosiliconate est effectuée à 60°C ou plus.

**7.** Procédé selon la revendication 1, qui comprend en outre l'étape (iii) de lavage de la fibre après l'étape (ii).

**8.** Fibre modifiée par le procédé de l'une quelconque des revendications 1 à 7.

**9.** Fibre modifiée selon la revendication 8, dans laquelle la surface d'une monofibre est enrobée d'un polymère de l'organosiliconate selon une épaisseur n'étant pas supérieure à 1/10ème du diamètre de la monofibre.

**10.** Fibre modifiée selon la revendication 8, dans laquelle un polymère de l'organosiliconate est contenu à l'intérieur de la monofibre.

10 0kV 15 0mm x1 50k SE(M)    30μm
                              30 0um

Fig. 1

Fig. 2

Fig. 3

Fig. 4

Fig. 5

30μm

Fig. 6

Fig. 7

Fig. 8

Fig. 9

Spot 2 (gap)

Spot 1
(Inside single fiber)

30μm

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003342875 A
- JP 2005089882 A
- JP 2002061094 A